(19) Europäisches Patentamt
European Patent Office
Office européen des brevets

(11) **EP 4 682 597 A1**

(12) **EUROPEAN PATENT APPLICATION**
published in accordance with Art. 153(4) EPC

(43) Date of publication:
**21.01.2026 Bulletin 2026/04**

(21) Application number: **23927516.7**

(22) Date of filing: **16.03.2023**

(51) International Patent Classification (IPC):
*G02B 6/02* [(2006.01)]

(52) Cooperative Patent Classification (CPC):
**G02B 6/02**

(86) International application number:
**PCT/JP2023/010317**

(87) International publication number:
**WO 2024/189897 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT, Inc.**
**Tokyo 100-8116 (JP)**

(72) Inventors:
• **MATSUI Takashi**
**Musashino-shi, Tokyo 180-8585 (JP)**
• **NAKAJIMA Kazuhide**
**Musashino-shi, Tokyo 180-8585 (JP)**
• **SAGAE Yuto**
**Musashino-shi, Tokyo 180-8585 (JP)**

(74) Representative: **Hoffmann Eitle**
**Patent- und Rechtsanwälte PartmbB**
**Arabellastraße 30**
**81925 München (DE)**

(54) **MULTICORE OPTICAL FIBER AND MULTICORE OPTICAL FIBER DESIGN METHOD**

(57)     A multi-core optical fiber including: a plurality of cores 10 that is disposed in a square lattice shape or in a line along a longitudinal direction of the multi-core optical fiber; a plurality of first cladding regions 11 that surrounds the plurality of cores, respectively, and has a refractive index lower than a refractive index of the surrounded cores; a plurality of second cladding regions 12 that surrounds the plurality of first cladding regions, respectively, and has a refractive index lower than the refractive index of the surrounded first cladding regions; and a third cladding region 13 that surrounds the plurality of second cladding regions and has a refractive index lower than the refractive index of the plurality of cores, wherein a mode field diameter and a core interval of the plurality of cores are a mode field diameter and a core interval corresponding a region surrounded by intersections of a first line indicating an upper limit of a core interval in which an excessive loss of a core is equal to or less than a predetermined value, a second line indicating a lower limit of a core interval in which crosstalk between cores is equal to or less than a predetermined value, and a third line indicating a lower limit of a mode field diameter in which an increase amount of Rayleigh scattering loss of a core is equal to or less than a predetermined value in a graph representing a relationship between a mode field diameter and a core interval.

**Fig. 6**

**Description**

Technical Field

The present disclosure relates to a multi-core optical fiber and a method for designing a multi-core optical fiber.

Background Art

In recent years, multi-core optical fibers (MCFs) having a standard cladding diameter, which have high mass productivity of optical fibers and high compatibility with existing standard technologies, have attracted attention. For example, Patent Literature 1 and Non Patent Literature 1 disclose an MCF employing a trench-type refractive index distribution having a strong light confinement effect. Patent Literature 2 discloses an MCF employing a step index type refractive index distribution suitable for mass productivity.

In the MCF having the standard cladding diameter, the single-mode operation in all communication wavelength bands is guaranteed in a similar manner to a conventional single-mode optical fiber, but crosstalk occurs in which optical signals interfere with each other between cores. Therefore, Patent Literature 3 discloses an MCF for long-distance transmission in which crosstalk is reduced by limiting a transmission wavelength band in a single-mode operation region of each core to 1.53 $\mu$m to 1.625 $\mu$m of C and L bands or 1.46 $\mu$m to 1.625 $\mu$m of S, C, and L bands.

Citation List

Patent Literature

Patent Literature 1: WO 2022/034662 A
Patent Literature 2: Japanese Patent No. 7172634
Patent Literature 3: Japanese Patent No. 6560806

Non Patent Literature

Non Patent Literature 1: Takashi Matsui and six others, "Design of 125$\mu$m cladding multi-core fiber with full-band compatibility to conventional single-mode fiber", Date of Conference: 27 September 2015 - 01 October 2015, DOI: 10.1109/ECOC.2015.7341966, <URL: https://ieeexplore.ieee.org/document/7341966>

Summary of Invention

Technical Problem

However, in the design of the MCF having the standard cladding diameter, in order to suppress crosstalk and excessive loss in design, the size of a mode field diameter (MFD) representing the spread of the light intensity distribution of the optical signal in the cross section is limited. Therefore, there is an issue that it is extremely difficult to increase the MFD, and the loss tends to increase, as compared with the single mode of the existing single core. For example, in the case of an MCF having a four-core structure, the MFD is as small as about 9 $\mu$m to 10 $\mu$m, and the loss coefficient is as large as 0.155 dB/km to 0.18 dB/km.

The present disclosure has been made in view of the above circumstances, and an object of the present disclosure is to provide a multi-core optical fiber and a method for designing a multi-core optical fiber capable of increasing a mode field diameter while ensuring control of crosstalk and excessive loss in design.

Solution to Problem

A multi-core optical fiber of an aspect of the present disclosure includes: a plurality of cores that is disposed in a square lattice shape or in a line along a longitudinal direction of the multi-core optical fiber; a plurality of first cladding regions that surrounds the plurality of cores, respectively, and has a refractive index lower than a refractive index of the surrounded cores; a plurality of second cladding regions that surrounds the plurality of first cladding regions, respectively, and has a refractive index lower than the refractive index of the surrounded first cladding regions; and a third cladding region that surrounds the plurality of second cladding regions and has a refractive index lower than the refractive index of the plurality of cores, wherein a mode field diameter and a core interval of the plurality of cores are a mode field diameter and a core interval corresponding a region surrounded by intersections of: a first line indicating an upper limit of a core interval in which an excessive loss of a core is equal to or less than a predetermined value; a second line indicating a lower limit of a core interval in which crosstalk between cores is equal to or less than a predetermined value; and a third line indicating a lower limit of a mode field diameter in which an increase amount of Rayleigh scattering loss of a core is equal to or less than a predetermined value in a graph representing a relationship between a mode field diameter and a core interval.

A multi-core optical fiber of an aspect of the present disclosure includes: a plurality of cores that is disposed in a square lattice shape or in a line along a longitudinal direction of the multi-core optical fiber; a plurality of first cladding regions that surrounds the plurality of cores, respectively, and has a refractive index lower than a refractive index of the surrounded cores; a plurality of second cladding regions that surrounds the plurality of first cladding regions, respectively, and has a refractive index lower than the refractive index of the surrounded first cladding regions; and a third cladding region that surrounds the plurality of second cladding regions and has a refractive index lower than the refractive index of the plurality of cores, wherein a diameter of the third cladding region is $125 \pm 1$ $\mu$m, a cutoff wavelength is 1.53 $\mu$m or less, a mode field diameter of the plurality of cores at a wavelength of 1.55 $\mu$m is 9.5 $\mu$m to 15.0 $\mu$m, and a core interval of the plurality of cores is 33 $\mu$m to 50 $\mu$m.

A method for designing a multi-core optical fiber of an aspect of the present disclosure, the multi-core optical fiber including: a plurality of cores that is disposed in a square lattice shape or in a line along a longitudinal direction of the multi-core optical fiber; a plurality of first cladding regions that surrounds the plurality of cores, respectively, and has a refractive index lower than a refractive index of the surrounded cores; a plurality of second cladding regions that surrounds the plurality of first cladding regions, respectively, and has a refractive index lower than the refractive index of the surrounded first cladding regions; and a third cladding region that surrounds the plurality of second cladding regions and has a refractive index lower than the refractive index of the plurality of cores, includes calculating, by a computer, a mode field diameter and a core interval corresponding to a region surrounded by intersections of a first line indicating an upper limit of a core interval in which an excessive loss of a core is equal to or less than a predetermined value, a second line indicating a lower limit of a core interval in which crosstalk between cores is equal to or less than a predetermined value, and a third line indicating a lower limit of a mode field diameter in which an increase amount of Rayleigh scattering loss of a core is equal to or less than a predetermined value in a graph representing a relationship between a mode field diameter and a core interval as a mode field diameter and a core interval of the plurality of cores.

Advantageous Effects of Invention

According to the present disclosure, it is possible to provide a technique capable of increasing a mode field diameter while ensuring control of crosstalk and excessive loss in design.

Brief Description of Drawings

[Figure 1] Fig. 1 is a diagram illustrating a cross-sectional structure of an MCF according to a first embodiment.
[Figure 2] Fig. 2 is a diagram illustrating a refractive index distribution of a region near a core.
[Figure 3] Fig. 3 is a diagram illustrating a relationship between an MFD and an increase amount of Rayleigh scattering loss.
[Figure 4] Fig. 4 is a diagram illustrating a relationship between co-directional crosstalk and bidirectional crosstalk.
[Figure 5] Fig. 5 is a diagram illustrating a relationship between co-directional crosstalk and wavelength.
[Figure 6] Fig. 6 is a diagram illustrating a relationship between an MFD and a core interval.
[Figure 7A] Fig. 7A is a diagram illustrating a relationship between an MFD and a core interval with respect to $\Delta_1$.
[Figure 7B] Fig. 7B is a diagram illustrating a relationship between an MFD and a core interval with respect to $\Delta_1$.
[Figure 8A] Fig. 8A is a diagram illustrating a relationship between an MFD and a core interval with respect to $\Delta_1$.
[Figure 8B] Fig. 8B is a diagram illustrating a relationship between an MFD and a core interval with respect to $\Delta_1$.
[Figure 9A] Fig. 9A is a diagram illustrating a relationship between an MFD and a core interval with respect to $\Delta_1$.
[Figure 9B] Fig. 9B is a diagram illustrating a relationship between an MFD and a core interval with respect to $\Delta_1$.
[Figure 10] Fig. 10 is a diagram illustrating a functional block configuration of an MCF design device.
[Figure 11] Fig. 11 is a diagram illustrating a method for designing an MCF.
[Figure 12] Fig. 12 is a diagram illustrating a cross-sectional structure of an MCF according to a second embodiment.
[Figure 13] Fig. 13 is a diagram illustrating a hardware configuration of an MCF design device.

Description of Embodiments

Hereinafter, embodiments of the present disclosure will be described with reference to the drawings. In the drawings, the same portions are denoted by the same reference signs, and description thereof is omitted.

[First Embodiment]

(Structure of MCF 1)

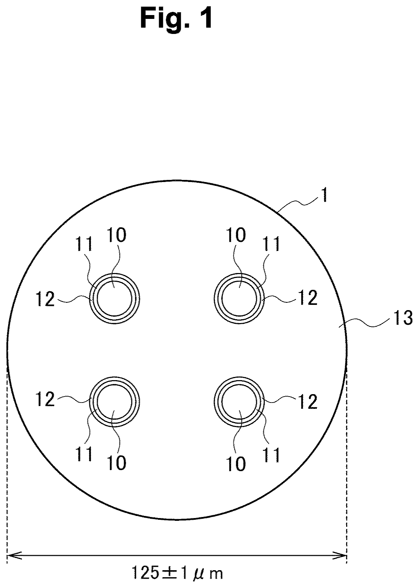

Fig. 1 is a diagram illustrating a cross-sectional structure of an MCF according to a first embodiment. An MCF 1 has a standard cladding diameter of about $125 \pm 1$ $\mu$m. The MCF 1 includes four cores 10 disposed in a square lattice shape along a longitudinal direction (extending direction) of the depth of the paper surface, four first cladding regions 11 surrounding the four cores 10, respectively, four second cladding regions 12 surrounding the four first cladding regions 11, respectively, and one third cladding region 13 surrounding all the second cladding regions 12. The diameter of the third cladding region 13 is about $125 \pm 1$ $\mu$m.

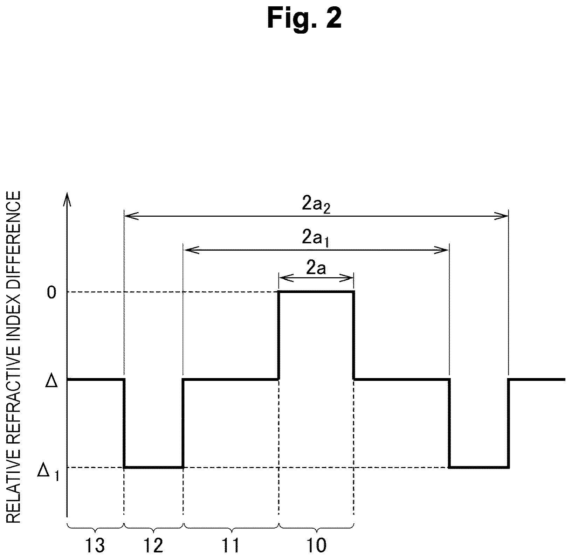

Fig. 2 is a diagram illustrating a refractive index distribution of a region near a core. The horizontal axis represents a lateral direction of the MCF 1 (radial direction passing through the center of the core 10), and the vertical axis represents a relative refractive index difference. The refractive index of the first cladding region 11 is lower than that of the core 10. The refractive index of the second cladding region 12 is lower than that of the first cladding region 11. The refractive index of the third cladding region 13 is lower than that of the four cores 10. Each core 10 has such a trench-type refractive index distribution or a refractive index distribution similar thereto. The refractive index distributions of the cores 10 are substantially the same.

Hereinafter, the radius of the core 10 is a. The radius of the inner diameter of the second cladding region 12 is $a_1$. The radius of the outer diameter of the second cladding region 12 is $a_2$. An absolute value of the relative refractive index difference between the core 10 and the first cladding region 11 is $\Delta$. An absolute value of the relative refractive index difference between the core 10 and the second cladding region 12 is $\Delta_1$. The relative refractive index difference between the core 10 and the third cladding region 13 may be equal to $\Delta$ or different from $\Delta$.

In addition, the transmission wavelength band is 1.53 $\mu$m to 1.625 $\mu$m of C and L bands or 1.46 $\mu$m to 1.625 $\mu$m of S, C, and L bands. The material of the core 10 is pure quartz glass.

(Rayleigh Scattering Loss)

Rayleigh scattering loss, which is a loss of a single core, will be described.

In the MCF 1 having the above structure and refractive index distribution, when a wavelength $\lambda$ = 1.55 $\mu$m, $a_1/a$ = 2.0, $a_2/a$ = 3.0, and $\Delta_1$ = 0.6%, the MFD was changed by adjusting a and $\Delta$ such that a cutoff wavelength $\lambda_c$ was 1.53 $\mu$m.

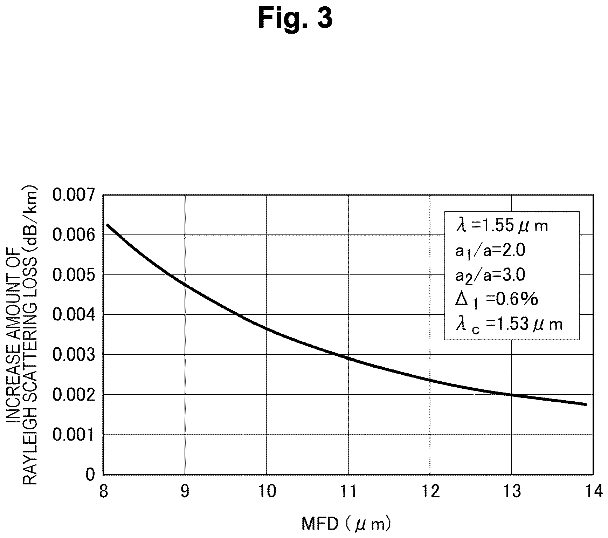

Fig. 3 is a diagram illustrating a relationship between the MFD ($\mu$m) and the increase amount (dB/km) of the Rayleigh scattering loss at this time. It can be confirmed that the increase amount of the Rayleigh scattering loss decreases with an increase in the MFD. This is considered to be because an electric field component contained in the core 10, which is pure quartz glass, increased with an increase in the MFD. In addition, it is also considered that an electric field component leaking from the core 10 to the first cladding region 11 or the outside thereof is reduced, and scattering loss and structural failure loss at an interface between the core and the cladding are also reduced.

As can be seen from Fig. 3, for example, when it is desired to reduce the increase amount of the Rayleigh scattering loss to 0.003 dB or less per 1 km, it is sufficient if the MFD is set to about 10.8 $\mu$m or more. That is, MFD = 10.8 $\mu$m can be used as a lower limit value of the MFD in which the increase amount of the Rayleigh scattering loss is 0.003 dB/km or less.

(Crosstalk)

Crosstalk, which is a loss between cores, will be described.

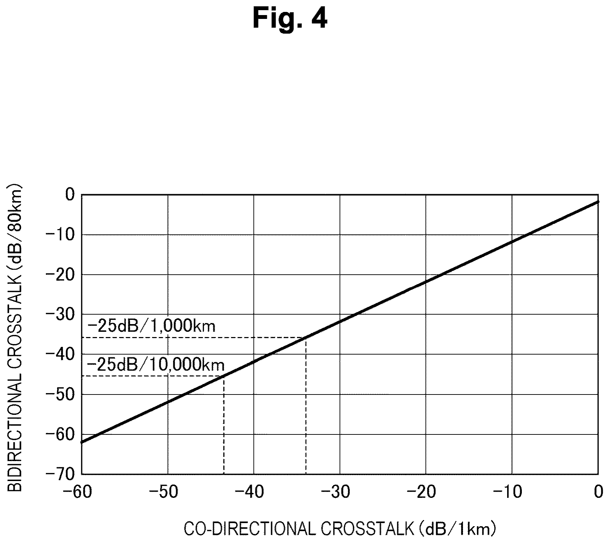

Fig. 4 is a characteristic diagram illustrating a crosstalk relationship between: co-directional transmission in which optical signals are transmitted between adjacent cores in the same direction; and bidirectional transmission in which optical signals are transmitted in opposite directions. The horizontal axis represents co-directional crosstalk (dB/1 km) after transmission of 1 km, and the vertical axis represents bidirectional crosstalk (dB/80 km) after transmission of 80 km.

In general, bidirectional transmission has a characteristic that crosstalk can be made smaller than that in co-directional transmission. Therefore, as illustrated in Fig. 4, the crosstalk per 80 km in the bidirectional transmission and the crosstalk per 1 km in the co-directional transmission are substantially equal to each other. Note that the crosstalk relationship between the co-directional transmission and the bidirectional transmission does not depend on wavelengths.

Here, reduction in crosstalk is considered. For example, in order to sufficiently reduce the influence of the crosstalk during the bidirectional transmission on a reception signal, a case is considered in which crosstalk at a reception end during the bidirectional transmission is reduced to about -25 dB.

In this case, for example, for transmission distances of 1,000 km and 10,000 km, bidirectional crosstalk needs to be about -35 dB and -45 dB per 80 km, respectively. At this time, from Fig. 4, it is necessary to set the co-directional crosstalk corresponding to each to about -35 dB and about -45 dB per 1 km.

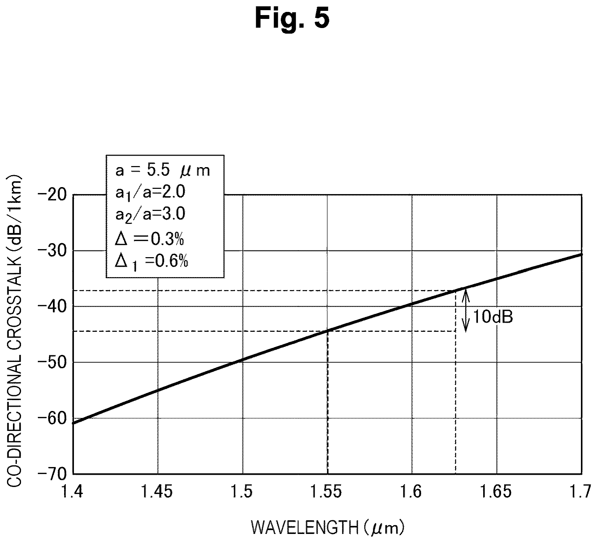

Fig. 5 is a diagram illustrating an example of co-directional crosstalk in the MCF 1. The horizontal axis represents wavelengths ($\mu$m), and the vertical axis represents co-directional crosstalk (dB/1 km) after transmission of 1 km. The values of $a_1/a$, $a_2/a$, and $\Delta_1$ were the same as the above values, and a = 5.5 $\mu$m and $\Delta$ = 0.3% were set.

From Fig. 5, it can be confirmed that the co-directional crosstalk of the MCF 1 increases substantially linearly as the wavelength increases. A wavelength corresponding to the co-directional crosstalk of about "-35 dB per 1 km" is about 1.625 $\mu$m. It can be grasped that the crosstalk at about 1.55 $\mu$m equal to or less than the wavelength is reduced by about 10 dB.

Note that in a land relay system up to about 1,000 km, large-capacity transmission using an L band in addition to a C band is used. In a submarine relay system of several thousand to 10,000 km, generally, only the C band is used due to limitation of transmission power and the like.

From Figs. 4 and 5, considering the bands to be used, by setting the co-directional crosstalk to about -35 dB or less per 1 km at $\lambda$ = 1.625 $\mu$m, sufficiently small crosstalk characteristics of "crosstalk at the reception end is -25 dB" or less during the bidirectional transmission can be obtained in the C and L bands in the class of 1,000 km and in the C band in the class of several thousand to 10,000 km.

In addition, the same applies to the case of reducing the influence of crosstalk on the reception signal during the co-directional transmission. The bidirectional crosstalk with respect to the wavelength is acquired, and the crosstalk at the reception end during the co-directional transmission can be reduced to a predetermined value or less on the basis of the mutual crosstalk relationship between the co-directional transmission and the bidirectional transmission illustrated in Fig. 4.

(Method for Designing MCF (Method for Calculating MFD and Core Interval))

Next, a method for calculating the MFD and the core interval that enables the MFD to be increased while ensuring the control of the loss in the MCF 1 will be described.

First, the lower limit of the MFD in which the increase amount of the Rayleigh scattering loss is equal to or less than a predetermined value, and the lower limit of the core interval in which the crosstalk is equal to or less than a predetermined value are calculated. The method for calculating these is as described above. In addition, the upper limit of the core interval in which the excessive loss in design is equal to or less than a predetermined value is calculated using a known method.

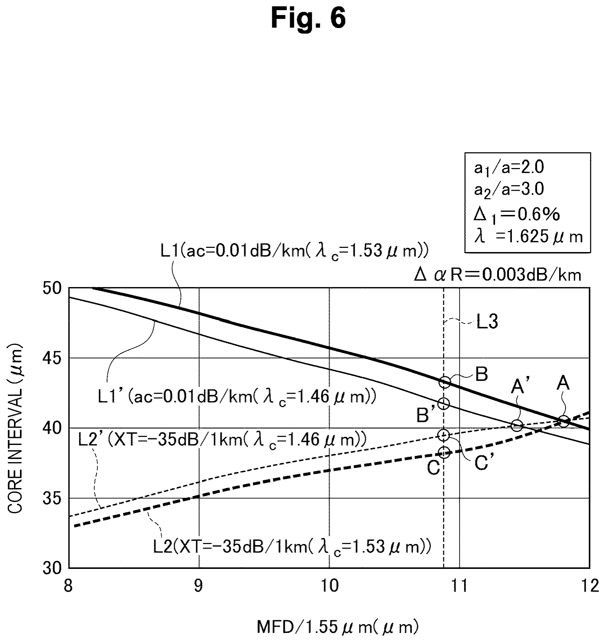

Next, the calculation results are input to the graph of Fig. 6 representing the relationship between the MFD and the core interval. The horizontal axis represents the MFD ($\mu$m) at a wavelength of 1.55 $\mu$m, and the vertical axis represents the core interval ($\mu$m). Here, $a_1/a$ = 2.0, $a_2/a$ = 3.0, $\Delta_1$ = 0.6%, and $\lambda$ = 1.625 $\mu$m.

For example, the upper limit of the core interval in which the excessive loss in design $\alpha$c is 0.01 dB/km or less is a first line L1 when $\lambda_c$ = 1.53 $\mu$m and is a first line L1' when $\lambda_c$ = 1.46 $\mu$m. The lower limit of the core interval in which a co-directional crosstalk XT is -35 dB or less per 1 km is a second line L2 when $\lambda_c$ = 1.53 $\mu$m and is a second line L2' when $\lambda_c$ = 1.46 $\mu$m. The lower limit of the MFD in which an increase amount $\Delta\alpha$R of the Rayleigh scattering loss is 0.003 dB/km or less with respect to the core 10 of pure quartz glass is a third line L3. Note that the dependency of the increase amount $\Delta\alpha$R of the Rayleigh scattering loss on the cutoff wavelength $\lambda_c$ is sufficiently small.

From Fig. 6, the structure of the MCF 1 satisfying the reduction conditions of the excessive loss in design, the co-directional crosstalk, and the Rayleigh scattering loss is a region surrounded by: an intersection A of the first line L1 and the second line L2, an intersection B of the first line L1 and the third line L3, and an intersection C of the second line L2 and the third line L3, with respect to a cutoff wavelength of 1.53 $\mu$m or less. When the cutoff wavelength is 1.46 $\mu$m or less, it is a region surrounded by: an intersection A' of the first line L1' and the second line L2', an intersection B' of the first line L1' and the third line L3, and an intersection C' of the second line L2' and the third line L3. Therefore, the intersections A, B, C, A', B', and C' are set as structural conditions for the MCF 1.

Then, the MFD and the core interval corresponding to the region surrounded by the structural conditions A, B, and C are calculated (set) as the MFD and the core interval of the MCF 1 with the cutoff wavelength of 1.53 $\mu$m or less. In addition, the MFD and the core interval corresponding to the region surrounded by the structural conditions A', B', and C' are calculated (set) as the MFD and the core interval of the MCF 1 with the cutoff wavelength of 1.46 $\mu$m or less.

Note that, in a case where the cutoff wavelength is 1.46 $\mu$m or less, the size of the region is smaller than that in a case where the cutoff wavelength is 1.53 $\mu$m or less, and thus the MFD and the core interval are small, but it can be said to be preferable from the viewpoint of ensuring the single-mode operation in the S band, extending the use wavelength band, and stability of Raman amplification with respect to the C band.

In this manner, since the MFD and core interval corresponding to the region surrounded by the structural conditions A, B, and C or the structural conditions A', B', and C' are set, the mode field diameter can be increased while ensuring control of crosstalk and excessive loss in design.

A more detailed calculation method will be described.

For example, any one or more of $a_1/a$, $a_2/a$, and $\Delta_1$ are changed. Then, the values of the structural conditions A, B, C, A', B', and C' after the change are calculated. For example, $a_1/a$ may be changed to any of 1.5, 2.0, and 2.5, $a_2/a$ may be changed to any of 2.5, 3.0, and 3.5, and $\Delta_1$ may be changed to any of 0.40% to 0.80%.

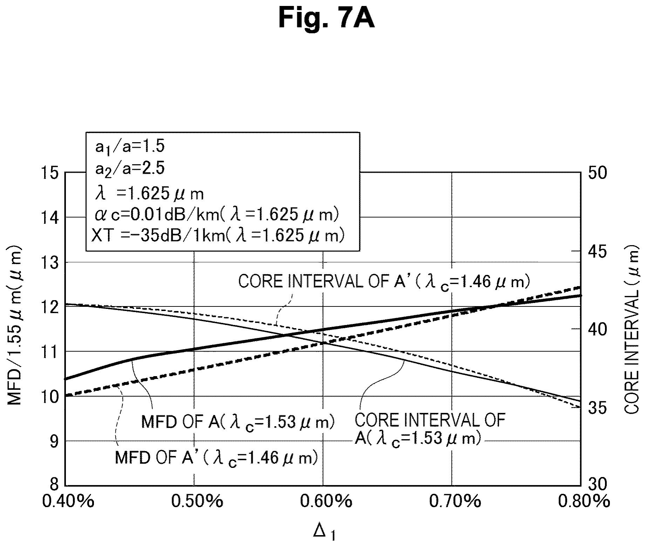

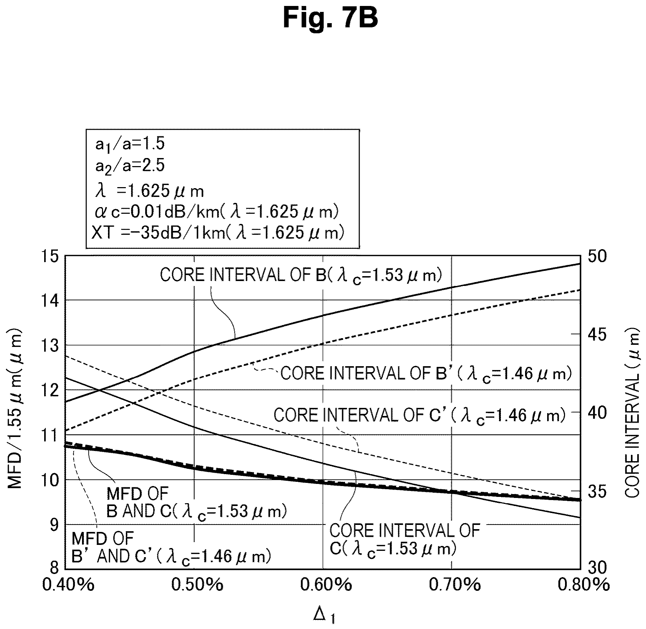

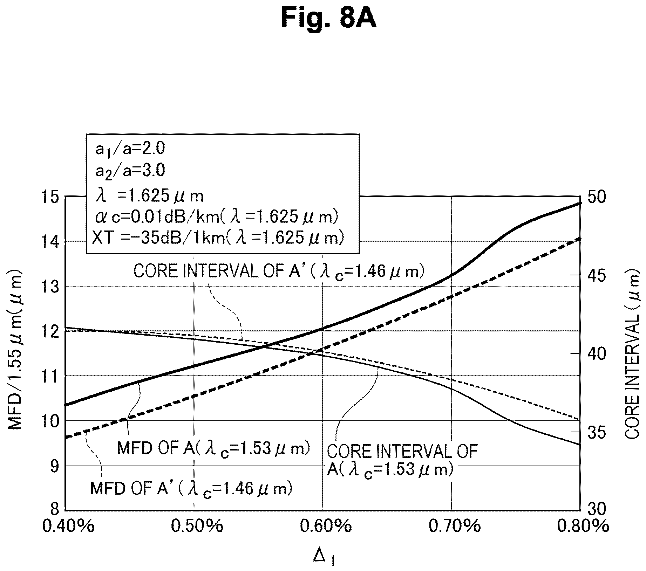

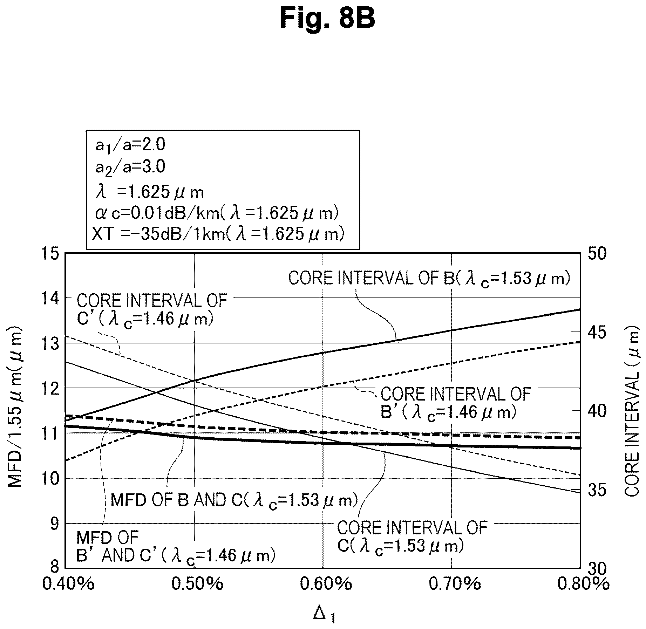

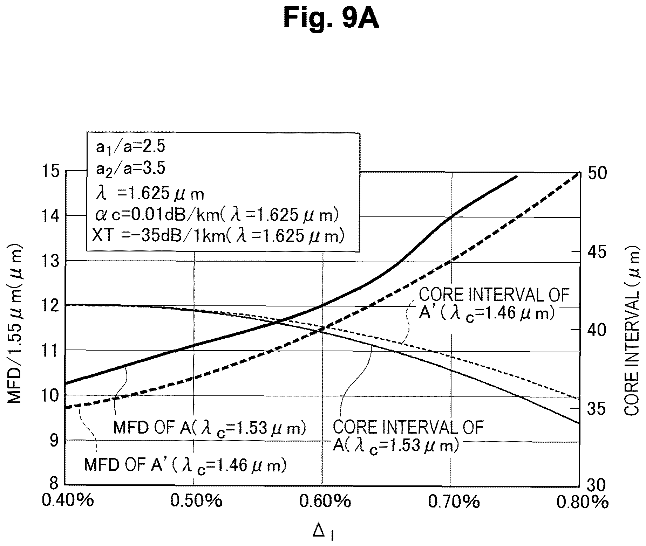

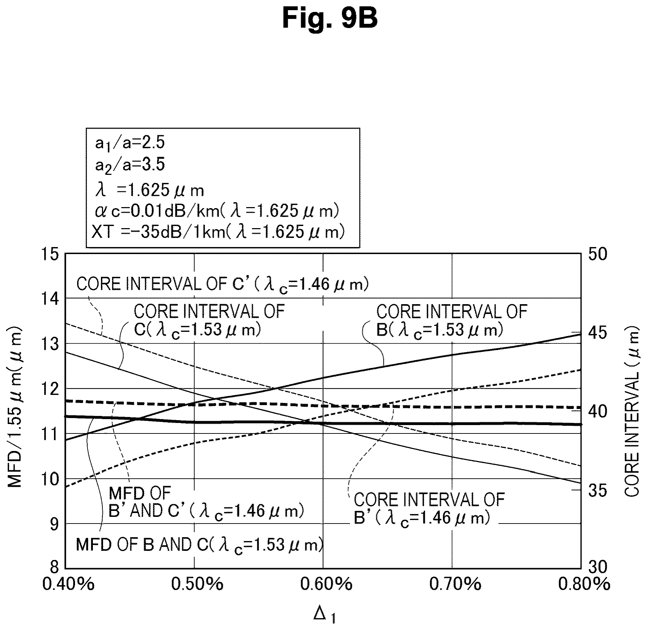

The dependency of the structural conditions A, B, C, A', B', and C' after the change on $\Delta_1$ is illustrated in Figs. 7A, 7B, 8A, 8B, 9A, and 9B. The horizontal axis represents $\Delta_1$, the left vertical axis represents the MFD ($\mu$m) at a wavelength of 1.55 $\mu$m, and the right vertical axis represents the core interval ($\mu$m). Figs. 7A and 7B illustrate a case where $a_1/a$ = 1.5 and $a_2/a$ = 2.5. Figs. 8A and 8B illustrate a case where $a_1/a$ = 2.0 and $a_2/a$ = 3.0. Figs. 9A and 9B illustrate a case where $a_1/a$ = 2.5 and $a_2/a$ = 3.5. Figs. 7A, 8A, and 9A illustrate the MFD and the core interval under the structural conditions A and A'. Figs. 7B, 8B, and 9B illustrate the MFDs and the core intervals under the structural conditions B and B' and the structural conditions C and C'.

The MFD and the core interval are calculated (set) using the highest value and the lowest value among the values of the structural conditions A, B, C, A', B', and C' after the change within the range of 0.40% to 0.80% for $\Delta_1$. From Figs. 7A, 7B, 8A, 8B, 9A, and 9B, when the cutoff wavelength is 1.53 $\mu$m or less, the MFD at a wavelength of 1.55 $\mu$m is about 9.5 $\mu$m to about 15.0 $\mu$m, and the core interval is about 33 $\mu$m to about 50 $\mu$m.

By setting the MFD and the core interval to these values, it is possible to reduce co-directional crosstalk between cores at a wavelength of 1.625 $\mu$m to -35 dB or less when optical signals are propagated 1 km in the same direction in all the cores. The set value of the MFD is within a range of 9.5 $\mu$m to 15.0 $\mu$m defined by the International Standard for single-mode optical fibers "ITU-TG. 654 (Category D)".

In this manner, since any one or more of $a_1/a$, $a_2/a$, and $\Delta_1$ are changed, and an MFD and a core interval corresponding to a region surrounded by the corresponding structural conditions A, B, and C or structural conditions A', B', and C', after the change, are set, the mode field diameter can be appropriately increased while appropriately ensuring control of crosstalk and excessive loss in design.

(MCF Design Means and Design Flow (Calculation Flow of MFD and Core Interval))

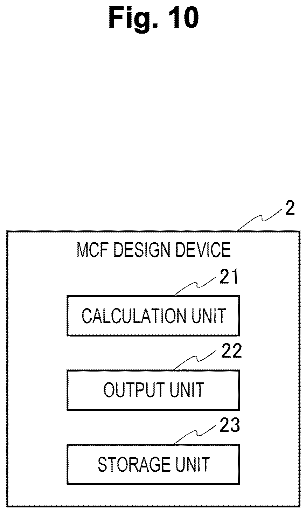

Fig. 10 is a diagram illustrating a functional block configuration of an MCF design device 2. The MCF design device 2 is a computer for designing the MCF 1, and includes a calculation unit 21 that calculates the MFD and the core interval, an output unit 22 that outputs the calculated MFD and core interval, and a storage unit 23 that stores various data necessary for calculating the MFD and the core interval.

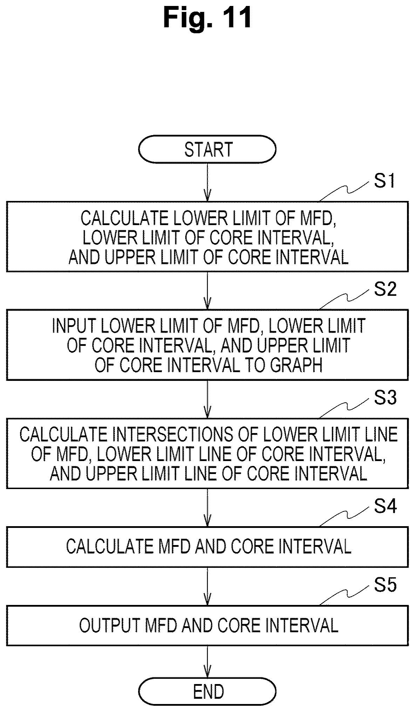

Fig. 11 is a diagram illustrating a calculation flow of the MFD and the core interval.

First, the calculation unit 21 calculates the lower limit of the MFD in which the increase amount of the Rayleigh scattering loss is equal to or less than a predetermined value, the lower limit of the core interval in which the crosstalk is equal to or less than a predetermined value, and the upper limit of the core interval in which the excessive loss in design is equal to or less than a predetermined value (step S1).

Next, the calculation unit 21 inputs the upper limit of the core interval, the lower limit of the core interval, and the lower limit of the MFD calculated in step S1 to a graph representing the relationship between the MFD and the core interval (step S2).

Next, the calculation unit 21 calculates, for each cutoff wavelength, the intersection A(A') of the first line L1 indicating the upper limit of the core interval and the second line L2 indicating the lower limit of the core interval, the intersection B(B') of the first line L1 and the third line L3 indicating the lower limit of the MFD, and the intersection C(C') of the second line L2 and the third line L3 (step S3).

Next, the calculation unit 21 calculates the MFD and the core interval corresponding to the region surrounded by the intersections A, B, and C(A', B', and C') in the graph, as the MFD and the core interval of the MCF 1 (step S4). At this time, the calculation unit 21 changes any one or more of $a_1/a$, $a_2/a$, and $\Delta_1$, and calculates the MFD and the core interval of the MCF 1 using the highest value and the lowest value among the values of the intersections A, B, and C after the change.

Finally, the output unit 22 outputs the MFD and the core interval of the MCF 1 (step S5).

(Calculation Formula of MFD and Core Interval)

From the above results, the MFD and the core interval under the structural conditions A, B, and C can be approximated as in Formula (1). $A_W$, $B_W$, and $C_W$ are the MFDs under the structural conditions A, B, and C, respectively. $A_\Lambda$, $B_\Lambda$, and $C_\Lambda$ are the core intervals under the structural conditions A, B, and C, respectively.

[Math. 1]

$$A_W = K_{\Delta1,AW}\Delta_1^2 + K_{\Delta2,AW}\Delta_1 + K_{\Delta3,AW}$$
$$A_\Lambda = K_{\Delta1,A\Lambda}\Delta_1^2 + K_{\Delta2,A\Lambda}\Delta_1 + K_{\Delta3,A\Lambda}$$
$$B_W = C_W = K_{\Delta1,BW}\Delta_1^2 + K_{\Delta2,BW}\Delta_1 + K_{\Delta3,BW} \qquad \cdots(1)$$
$$B_\Lambda = K_{\Delta1,B\Lambda}\Delta_1^2 + K_{\Delta2,B\Lambda}\Delta_1 + K_{\Delta3,B\Lambda}$$
$$C_\Lambda = K_{\Delta1,C\Lambda}\Delta_1^2 + K_{\Delta2,C\Lambda}\Delta_1 + K_{\Delta3,C\Lambda}$$

$B_W$ and $C_W$ are equal to each other as illustrated in Fig. 6. $K_{\Delta1}$ to $K_{\Delta3}$ are proportional constants. $K_{\Delta1}$ to $K_{\Delta3}$ of the structural conditions A, B, and C are as illustrated in Table 1.

[Table 1]

|  | $a_1/a$ | $A_W$ | $A_\Lambda$ | $B_W,C_W$ | $B_\Lambda$ | $C_\Lambda$ |
|---|---|---|---|---|---|---|
| $K_{\Delta1}$ | 1.5 | -21319 | -176402 | 60621 | -278742 | 231356 |
|  | 2.0 | 222075 | -515232 | 31189 | -175856 | 158811 |
|  | 2.5 | 331576 | -504470 | 12115 | -117701 | 133194 |
| $K_{\Delta2}$ | 1.5 | 674 | 515 | -1033 | 5532 | -4952 |
|  | 2.0 | -1559 | 4343 | -486 | 3802 | -3927 |
|  | 2.5 | -2573 | 4195 | -179 | 3001 | -3651 |
| $K_{\Delta3}$ | 1.5 | 8.2 | 42.4 | 13.9 | 23.0 | 58.2 |
|  | 2.0 | 13.4 | 32.3 | 12.6 | 27.1 | 56.1 |
|  | 2.5 | 15.6 | 32.8 | 11.9 | 28.4 | 56.2 |

Since the relationship between the MFD and the core interval with respect to $\Delta_1$ depends on $a_1/a$ as illustrated in Figs. 7A, 7B, 8A, 8B, 9A, and 9B, $K_{\Delta1}$ to $K_{\Delta3}$ of the structural conditions A, B, and C can be approximated as in Formula (2).
[Math. 2]

$$K_{\Delta1} = K_{1a}\left(\frac{a_1}{a}\right)^2 + K_{1b}\left(\frac{a_1}{a}\right) + K_{1c}$$
$$K_{\Delta2} = K_{2a}\left(\frac{a_1}{a}\right)^2 + K_{2b}\left(\frac{a_1}{a}\right) + K_{2c} \qquad \cdots(2)$$
$$K_{\Delta3} = K_{3a}\left(\frac{a_1}{a}\right)^2 + K_{3b}\left(\frac{a_1}{a}\right) + K_{3c}$$

$K_{1a}$ to $K_{1c}$, $K_{2a}$ to $K_{2c}$, and $K_{3a}$ to $K_{3c}$ are proportional constants. $K_{1a}$ to $K_{1c}$, $K_{2a}$ to $K_{2c}$, and $K_{3a}$ to $K_{3c}$ of the structural conditions A, B, and C are as illustrated in Table 2.

[Table 2]

|  | $A_W$ | $A_\Lambda$ | $B_W,C_W$ | $B_\Lambda$ | $C_\Lambda$ |
|---|---|---|---|---|---|
| $K_{1a}$ | -267786 | 699182 | 20715 | -89461 | 93858 |
| $K_{1b}$ | 1424041 | -3124798 | -131365 | 518887 | -473595 |
| $K_{1c}$ | -1554861 | 2937634 | 211061 | -855785 | 730568 |
| $K_{2a}$ | 2440 | -7950 | -480 | 1856 | -1499 |
| $K_{2b}$ | -13009 | 35480 | 2775 | -9953 | 7296 |
| $K_{2c}$ | 14698 | -34816 | -4115 | 16287 | -12524 |
| $K_{3a}$ | -6.0 | 21.3 | 1.4 | -5.8 | 4.4 |
| $K_{3b}$ | 31.2 | -94.7 | -7.5 | 28.8 | -19.7 |

(continued)

|  | $A_W$ | $A_\Lambda$ | $B_W,C_W$ | $B_\Lambda$ | $C_\Lambda$ |
|---|---|---|---|---|---|
| $K_{3c}$ | -25.2 | 136.6 | 22.1 | -7.0 | 77.8 |

In addition, the MFD and the core interval under the structural conditions A', B', and C' can be approximated as in Formula (3). $A'_W$, $B'_W$, and $C'_W$ are the MFDs under the structural conditions A', B', and C', respectively. $A'_\Lambda$, $B'_\Lambda$, and $C'_\Lambda$ are the core intervals under the structural conditions A', B', and C', respectively.

[Math. 3]

$$\left. \begin{aligned} A'_W &= K_{\Delta 1,AW}\Delta_1^2 + K_{\Delta 2,AW}\Delta_1 + K_{\Delta 3,AW} \\ A'_\Lambda &= K_{\Delta 1,A\Lambda}\Delta_1^2 + K_{\Delta 2,A\Lambda}\Delta_1 + K_{\Delta 3,A\Lambda} \\ B'_W &= C'_W = K_{\Delta 1,BW}\Delta_1^2 + K_{\Delta 2,BW}\Delta_1 + K_{\Delta 3,BW} \\ B'_\Lambda &= K_{\Delta 1,B\Lambda}\Delta_1^2 + K_{\Delta 2,B\Lambda}\Delta_1 + K_{\Delta 3,B\Lambda} \\ C'_\Lambda &= K_{\Delta 1,C\Lambda}\Delta_1^2 + K_{\Delta 2,C\Lambda}\Delta_1 + K_{\Delta 3,C\Lambda} \end{aligned} \right\} \quad \cdots(3)$$

$B'_W$ and $C'_W$ are equal to each other as illustrated in Fig. 6. $K_{\Delta 1}$ to $K_{\Delta 3}$ of the structural conditions A', B', and C' are illustrated in Table 3. $K_{\Delta 1}$ to $K_{\Delta 3}$ of the structural conditions A', B', and C' are the same as those in Formula (2), respectively. $K_{1a}$ to $K_{1c}$, $K_{2a}$ to $K_{2c}$, and $K_{3a}$ to $K_{3c}$ of the structural conditions A', B', and C' are illustrated in Table 4.

[Table 3]

|  | $a_1/a$ | $A'_W$ | $A'_\Lambda$ | $B'_W,C'_W$ | $B'_\Lambda$ | $C'_\Lambda$ |
|---|---|---|---|---|---|---|
| $K_{\Delta 1}$ | 1.5 | 17179 | -372339 | 54376 | -233317 | 220093 |
|  | 2.0 | 191655 | -465854 | 25666 | -162803 | 156996 |
|  | 2.5 | 349125 | -537714 | 3573 | -107511 | 146816 |
| $K_{\Delta 2}$ | 1.5 | 404 | 2793 | -955 | 4954 | -4848 |
|  | 2.0 | -1175 | 4173 | -420 | 3698 | -4044 |
|  | 2.5 | -2852 | 4981 | -69 | 2988 | -4032 |
| $K_{\Delta 3}$ | 1.5 | 8.1 | 36.3 | 13.7 | 23.0 | 59.2 |
|  | 2.0 | 11.7 | 31.9 | 12.6 | 25.1 | 58.2 |
|  | 2.5 | 16.0 | 29.7 | 11.9 | 25.6 | 59.4 |

[Table 4]

|  | $A'_W$ | $A'_\Lambda$ | $B'_W,C'_W$ | $B'_\Lambda$ | $C'_\Lambda$ |
|---|---|---|---|---|---|
| $K_{1a}$ | -34012 | 43309 | 13234 | -30443 | 105834 |
| $K_{1b}$ | 467994 | -338612 | -103738 | 247577 | -496611 |
| $K_{1c}$ | -608285 | 38133 | 180207 | -536187 | 726884 |
| $K_{2a}$ | -194 | -1144 | -371 | 1093 | -1583 |
| $K_{2b}$ | -2478 | 6763 | 2369 | -6337 | 7150 |
| $K_{2c}$ | 4558 | -4778 | -3675 | 12001 | -12010 |
| $K_{3a}$ | 1.5 | 4.4 | 0.9 | -3.3 | 4.2 |
| $K_{3b}$ | 1.7 | -24.4 | -5.4 | 15.8 | -16.8 |
| $K_{3c}$ | 2.1 | 62.9 | 19.9 | 6.7 | 74.8 |

(Effects)

According to the first embodiment, in the graph representing the relationship between the MFD and the core interval, the MFD and the core interval corresponding to the region surrounded by the intersections of the first line indicating the upper limit of the core interval in which the excessive loss of the core is equal to or less than a predetermined value, the second line indicating the lower limit of the core interval in which the crosstalk between the cores is equal to or less than a predetermined value, and the third line indicating the lower limit of the MFD in which the increase amount of the Rayleigh scattering loss of the core is equal to or less than a predetermined value are calculated as the MFD and the core interval of the core, and therefore, it is possible to provide a technique capable of increasing the MFD while ensuring the control of the crosstalk and the excessive loss in design. Since the MFD can be increased, it is also preferable from the viewpoint of controling a non-linear effect in an optical fiber transmission path.

That is, in the MCF having the standard cladding diameter, it is possible to ensure the crosstalk characteristic necessary for a long-distance and bidirectional transmission of 1,000 km or more, and the reduction in excessive loss including the L band, and at the same time, it is possible to achieve the reduction in loss factor such as Rayleigh scattering and the control of the non-linear effect, by the increase in the MFD.

In addition, according to the first embodiment, since the mode field diameter and the core interval corresponding to the region after any one or more of the ratio of the radius of the inner diameter of the second cladding region to the radius of the core, the ratio of the radius of the outer diameter of the second cladding region to the radius of the core, and the relative refractive index difference between the core and the second cladding region is changed are calculated as the MFD and the core interval of the core, it is possible to provide a technique capable of appropriately increasing the MFD while appropriately ensuring the control of the crosstalk and the excessive loss in design.

In addition, according to the first embodiment, since the MFD and the core interval are calculated using the approximate formula of Formula (1) or (3), it is possible to provide a technique capable of more appropriately and easily increasing the MFD while more appropriately and easily ensuring the control of the crosstalk and the excessive loss in design.

In addition, according to the first embodiment, when the cutoff wavelength is 1.53 $\mu$m or less, the mode field diameter at the wavelength of 1.55 $\mu$m is 9.5 $\mu$m to 15.0 $\mu$m, and the core interval is 33 $\mu$m to 50 $\mu$m, and therefore, it is possible to provide a technique capable of more appropriately and easily increasing the MFD while more appropriately and easily ensuring the control of the crosstalk and the excessive loss in design.

[Second Embodiment]

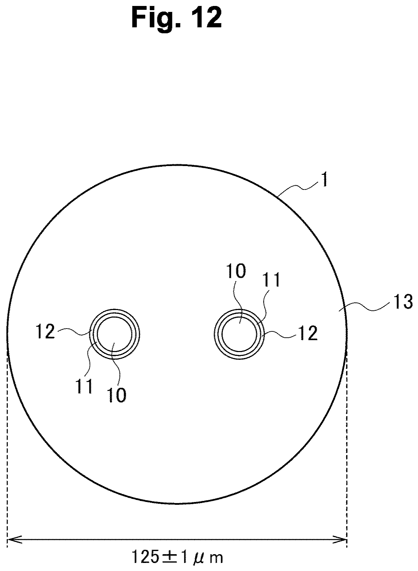

Fig. 12 is a diagram illustrating a cross-sectional structure of the MCF 1 according to a second embodiment. As in the first embodiment, the MCF 1 has a standard cladding diameter of about 125±1 $\mu$m. Two cores 10 are disposed in a line along a longitudinal direction. The two cores 10 have the trench-type refractive index distribution illustrated in Fig. 2 or a refractive index distribution similar thereto. The refractive index distributions of the cores 10 are substantially the same.

In the MCF 1 having a two-core structure, in a similar manner to Fig. 6, a structure in which excessive loss in design, crosstalk, and Rayleigh scattering loss are simultaneously controlled is considered. In this case, since the crosstalk, which is a loss between adjacent cores, and the increase amount of the Rayleigh scattering loss, which is a loss of each core, are constant regardless of the number of cores, in a similar manner to the MCF 1 having the four-core structure, a region surrounded by three intersections A, B, and C or a region surrounded by three intersections A', B', and C' is obtained.

In contrast, regarding the excessive loss in design, there is a relationship of Formula (4) when a clad thickness is OCT, a core interval is $\Lambda$, and a clad diameter is D in the MCF 1 having the standard cladding diameter in which the clad thickness is defined by the shortest distance from the center of each core to a clad end.

[Math. 4]

$$\left.\begin{array}{l} \text{In the case of two cores:}\ \Lambda_2 + 2OCT = D \\ \text{In the case of four cores:}\ \sqrt{2}\Lambda_4 + 2OCT = D \end{array}\right\} \cdots (4)$$

2 of $\Lambda_2$ is an identifier of a two-core structure. 4 of $\Lambda_4$ is an identifier of a four-core structure.

Since the OCT and D are the same in the two-core structure and the four-core structure, the upper limit of the core interval in the two-core structure that controls the excessive loss is $\sqrt{2}$ times the four-core structure according to Formula (4). Therefore, in the case of the two-core structure, in Fig. 6, a straight line connecting the intersections A and B and a straight line connecting the intersections A' and B' are shifted by $\sqrt{2}$ times in the upward direction of the vertical axis.

Accordingly, in the two-core structure, structural conditions $A_{W-2}$, $B_{W-2}$, $C_{W-2}$, $A_{\Lambda-2}$, $B_{\Lambda-2}$, and $C_{\Lambda-2}$ in a region where an excessive loss in design $\alpha c$ is 0.01 dB/km or less ($\lambda = 1.625$ $\mu$m), a co-directional crosstalk XT is -35 dB or less per

1 km ($\lambda$ = 1.625 $\mu$m), and an increase amount $\Delta\alpha$R of the Rayleigh scattering loss is 0.003 dB/km or less with respect to the core 10 of pure quartz glass can be approximated by Formula (5) using Formula (1).
[Math. 5]

$$
\left.
\begin{aligned}
A_{W-2} &= A_W + \frac{(\sqrt{2}-1)A_\Lambda}{K_C - \sqrt{2}K_B} \\
A_{\Lambda-2} &= \frac{\sqrt{2}(K_C - K_B)}{K_C - \sqrt{2}K_B} A_\Lambda \\
B_{W-2} &= C_{W-2} = B_W = C_W \\
B_{\Lambda-2} &= \sqrt{2}B_\Lambda \\
C_{\Lambda-2} &= C_\Lambda \\
&\text{where} \\
K_B &= \frac{B_\Lambda - A_\Lambda}{B_W - A_W} \\
K_C &= \frac{C_\Lambda - A_\Lambda}{C_W - A_W}
\end{aligned}
\right\} \quad \cdots(5)
$$

In addition, structural conditions A'$_{W-2}$, B'$_{W-2}$, C'$_{W-2}$, A'$_{\Lambda-2}$, B'$_{\Lambda-2}$, and C'$_{\Lambda-2}$ can be approximated by Formula (6) using Formula (3).
[Math. 6]

$$
\left.
\begin{aligned}
A'_{W-2} &= A'_W + \frac{(\sqrt{2}-1)A'_\Lambda}{K_C - \sqrt{2}K_B} \\
A'_{\Lambda-2} &= \frac{\sqrt{2}(K_C - K_B)}{K_C - \sqrt{2}K_B} A'_\Lambda \\
B'_{W-2} &= C'_{W-2} = B'_W = C'_W \\
B'_{\Lambda-2} &= \sqrt{2}B'_\Lambda \\
C'_{\Lambda-2} &= C'_\Lambda \\
&\text{where} \\
K_B &= \frac{B'_\Lambda - A'_\Lambda}{B'_W - A'_W} \\
K_C &= \frac{C'_\Lambda - A'_\Lambda}{C'_W - A'_W}
\end{aligned}
\right\} \quad \cdots(6)
$$

According to the second embodiment, since the MFD and the core interval are calculated using the approximate formula of Formula (5) or (6), it is possible to provide a technique capable of more appropriately and easily increasing the MFD while more appropriately and easily ensuring the control of the crosstalk and the excessive loss in design.

[Third Embodiment]

(Cover Layer)

In order to protect an optical fiber, a standard optical fiber is covered with a cover layer, such as a UV resin, so as to have a diameter of about 250$\pm$15 $\mu$m with respect to a cladding having a cladding diameter of 125 $\mu$m. Therefore, the MCFs 1 of the first embodiment and the second embodiment may also be covered with a cover layer so as to have a similar diameter size. Thus, it can be said to be preferable because it is suitable in size for existing optical cables, connector interfaces, and the like, having a similar diameter size.
In addition, the optical fiber may be covered so as to meet a specified value of the International Standard for single-mode optical fibers "IEC60793-2-50". That is, it may be covered so as to have a diameter of about 200$\pm$20 $\mu$m. As a result, the total number of cores, density, and transmission capacity can be dramatically increased, which can be said to be preferable.

(Bending Loss)

In consideration of implementation to an existing optical communication system, in the MCF 1, at a wavelength of 1.625 µm, a bending loss at a bending radius of 30 mm preferably meets a bending loss condition defined in the International Standard for single-mode optical fibers "ITU-TG.652" and "ITU-T G.654 (Category E)", specifically, is 0.1 dB/100 turns or less.

According to a third embodiment, since the diameter of an MCF 1 covered with a cover layer is set to about 250 ±15 µm or about 200±20 µm, it is possible to provide the MCF 1 suitable for international standards and the like.

[Others]

The present disclosure is not limited to the above embodiments. The first to third embodiments can be combined. The present disclosure may be modified in various manners within the gist of the present disclosure. For example, it is sufficient that the cores 10 be a plurality of cores disposed in a square lattice shape or in a line along the longitudinal direction of the multi-core optical fiber. A total of nine cores disposed in a 3 × 3 square lattice shape may be used, or three cores disposed in a line may be used.

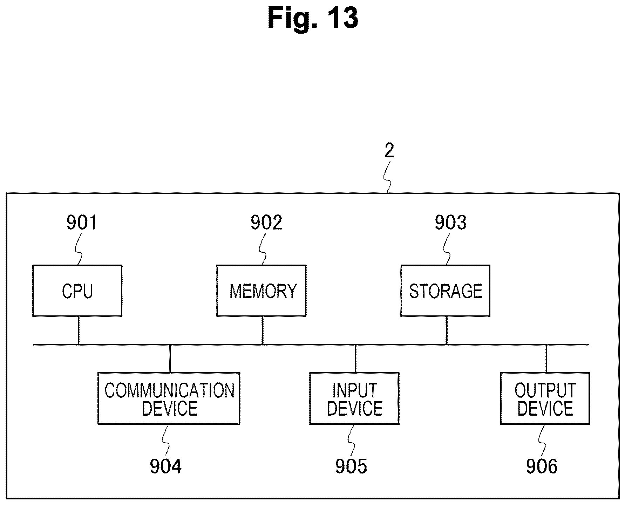

For example, as illustrated in Fig. 13, the MCF design device 2 described above can be implemented by using a general-purpose computer system including a CPU 901, a memory 902, a storage 903, a communication device 904, an input device 905, and an output device 906. The memory 902 and the storage 903 are storage devices. In the computer system, the CPU 901 executes a predetermined program loaded on the memory 902 to implement each function of the MCF design device 2.

The MCF design device 2 may be implemented by one computer. The MCF design device 2 may be implemented by a plurality of computers. The MCF design device 2 may be a virtual machine implemented on a computer.

The program for the MCF design device 2 can be stored in a computer-readable recording medium, such as an HDD, an SSD, a USB memory, a CD, or a DVD. The computer-readable recording medium is, for example, a non-transitory recording medium. The program for the MCF design device 2 can also be distributed via a communication network.

Reference Signs List

| | |
|---|---|
| 1 | MCF |
| 10 | Core |
| 11 | First cladding region |
| 12 | Second cladding region |
| 13 | Third cladding region |
| 2 | MCF design device |
| 21 | Calculation unit |
| 22 | Output unit |
| 23 | Storage unit |
| 901 | CPU |
| 902 | Memory |
| 903 | Storage |
| 904 | Communication device |
| 905 | Input device |
| 906 | Output device |

**Claims**

1. A multi-core optical fiber comprising:

   a plurality of cores that is disposed in a square lattice shape or in a line along a longitudinal direction of the multi-core optical fiber;
   a plurality of first cladding regions that surrounds the plurality of cores, respectively, and has a refractive index lower than a refractive index of the surrounded cores;
   a plurality of second cladding regions that surrounds the plurality of first cladding regions, respectively, and has a refractive index lower than the refractive index of the surrounded first cladding regions; and
   a third cladding region that surrounds the plurality of second cladding regions and has a refractive index lower than the refractive index of the plurality of cores,
wherein
a mode field diameter and a core interval of the plurality of cores are
a mode field diameter and a core interval corresponding a region surrounded by intersections of: a first line indicating an upper limit of a core interval in which an excessive loss of a core is equal to or less than a predetermined value; a second line indicating a lower limit of a core interval in which crosstalk between cores is equal to or less than a predetermined value; and a third line indicating a lower limit of a mode field diameter in which an increase amount of Rayleigh scattering loss of a core is equal to or less than a predetermined value, in a graph representing a relationship between a mode field diameter and a core interval.

2. The multi-core optical fiber according to claim 1, wherein

the plurality of cores is four cores disposed in a square lattice shape along the longitudinal direction of the multi-core optical fiber,
a diameter of the third cladding region is $125\pm1$ $\mu$m,
a cutoff wavelength is 1.53 $\mu$m or less, and
when an identifier of a mode field diameter at a wavelength of 1.55 $\mu$m is W, an identifier of a core interval is $\lambda$, a radius of the core is a, and a radius of an inner diameter of the second cladding region is $a_1$, a mode field diameter $A_W$ and a core interval $A_\Lambda$ corresponding to an intersection A of the first line and the second line, a mode field diameter $B_W$ and a core interval $B_\Lambda$ corresponding to an intersection B of the first line and the third line, and a mode field diameter $C_W$ and a core interval $C_\Lambda$ corresponding to an intersection C of the second line and the third line are expressed by a formula and a table below.

[Math. 7]

$$A_W = \left(K_{1a}\left(^{a_1}/_a\right)^2 + K_{1b}\left(^{a_1}/_a\right) + K_{1c}\right)\Delta_1^2 + \left(K_{2a}\left(^{a_1}/_a\right)^2 + K_{2b}\left(^{a_1}/_a\right) + K_{2c}\right)\Delta_1$$
$$+ \left(K_{3a}\left(^{a_1}/_a\right)^2 + K_{3b}\left(^{a_1}/_a\right) + K_{3c}\right)$$
$$A_\Lambda = \left(K_{1a}\left(^{a_1}/_a\right)^2 + K_{1b}\left(^{a_1}/_a\right) + K_{1c}\right)\Delta_1^2 + \left(K_{2a}\left(^{a_1}/_a\right)^2 + K_{2b}\left(^{a_1}/_a\right) + K_{2c}\right)\Delta_1$$
$$+ \left(K_{3a}\left(^{a_1}/_a\right)^2 + K_{3b}\left(^{a_1}/_a\right) + K_{3c}\right)$$
$$B_W = C_W = \left(K_{1a}\left(^{a_1}/_a\right)^2 + K_{1b}\left(^{a_1}/_a\right) + K_{1c}\right)\Delta_1^2 + \left(K_{2a}\left(^{a_1}/_a\right)^2 + K_{2b}\left(^{a_1}/_a\right) + K_{2c}\right)\Delta_1$$
$$+ \left(K_{3a}\left(^{a_1}/_a\right)^2 + K_{3b}\left(^{a_1}/_a\right) + K_{3c}\right)$$
$$B_\Lambda = \left(K_{1a}\left(^{a_1}/_a\right)^2 + K_{1b}\left(^{a_1}/_a\right) + K_{1c}\right)\Delta_1^2 + \left(K_{2a}\left(^{a_1}/_a\right)^2 + K_{2b}\left(^{a_1}/_a\right) + K_{2c}\right)\Delta_1$$
$$+ \left(K_{3a}\left(^{a_1}/_a\right)^2 + K_{3b}\left(^{a_1}/_a\right) + K_{3c}\right)$$
$$C_\Lambda = \left(K_{1a}\left(^{a_1}/_a\right)^2 + K_{1b}\left(^{a_1}/_a\right) + K_{1c}\right)\Delta_1^2 + \left(K_{2a}\left(^{a_1}/_a\right)^2 + K_{2b}\left(^{a_1}/_a\right) + K_{2c}\right)\Delta_1$$
$$+ \left(K_{3a}\left(^{a_1}/_a\right)^2 + K_{3b}\left(^{a_1}/_a\right) + K_{3c}\right)$$

[Table 5]

|          | $A_W$     | $A_\Lambda$ | $B_W,C_W$ | $B_\Lambda$ | $C_\Lambda$ |
|----------|-----------|-----------|-----------|-----------|-----------|
| $K_{1a}$ | -267786   | 699182    | 20715     | -89461    | 93858     |
| $K_{1b}$ | 1424041   | -3124798  | -131365   | 518887    | -473595   |
| $K_{1c}$ | -1554861  | 2937634   | 211061    | -855785   | 730568    |
| $K_{2a}$ | 2440      | -7950     | -480      | 1856      | -1499     |
| $K_{2b}$ | -13009    | 35480     | 2775      | -9953     | 7296      |
| $K_{2c}$ | 14698     | -34816    | -4115     | 16287     | -12524    |
| $K_{3a}$ | -6.0      | 21.3      | 1.4       | -5.8      | 4.4       |

(continued)

|  | A$_W$ | A$_\Lambda$ | B$_W$,C$_W$ | B$_\Lambda$ | C$_\Lambda$ |
|---|---|---|---|---|---|
| K$_{3b}$ | 31.2 | -94.7 | -7.5 | 28.8 | -19.7 |
| K$_{3c}$ | -25.2 | 136.6 | 22.1 | -7.0 | 77.8 |

3. The multi-core optical fiber according to claim 1, wherein

the plurality of cores is four cores disposed in a square lattice shape along the longitudinal direction of the multi-core optical fiber,
a diameter of the third cladding region is 125±1 μm,
a cutoff wavelength is 1.46 μm or less, and
when an identifier of a mode field diameter at a wavelength of 1.55 μm is W, an identifier of a core interval is A, a radius of the core is a, and a radius of an inner diameter of the second cladding region is a$_1$, a mode field diameter A'$_W$ and a core interval A'$_\Lambda$ corresponding to an intersection A' of the first line and the second line, a mode field diameter B'$_W$ and a core interval B'$_\Lambda$ corresponding to an intersection B' of the first line and the third line, and a mode field diameter C'$_W$ and a core interval C'$_\Lambda$ corresponding to an intersection C' of the second line and the third line are expressed by a formula and a table below.

[Math. 8]

$$A'_W = \left(K_{1a}\left(a_1/a\right)^2 + K_{1b}\left(a_1/a\right) + K_{1c}\right)\Delta_1^2 + \left(K_{2a}\left(a_1/a\right)^2 + K_{2b}\left(a_1/a\right) + K_{2c}\right)\Delta_1$$
$$+ \left(K_{3a}\left(a_1/a\right)^2 + K_{3b}\left(a_1/a\right) + K_{3c}\right)$$

$$A'_\Lambda = \left(K_{1a}\left(a_1/a\right)^2 + K_{1b}\left(a_1/a\right) + K_{1c}\right)\Delta_1^2 + \left(K_{2a}\left(a_1/a\right)^2 + K_{2b}\left(a_1/a\right) + K_{2c}\right)\Delta_1$$
$$+ \left(K_{3a}\left(a_1/a\right)^2 + K_{3b}\left(a_1/a\right) + K_{3c}\right)$$

$$B'_W = C'_W = \left(K_{1a}\left(a_1/a\right)^2 + K_{1b}\left(a_1/a\right) + K_{1c}\right)\Delta_1^2 + \left(K_{2a}\left(a_1/a\right)^2 + K_{2b}\left(a_1/a\right) + K_{2c}\right)\Delta_1$$
$$+ \left(K_{3a}\left(a_1/a\right)^2 + K_{3b}\left(a_1/a\right) + K_{3c}\right)$$

$$B'_\Lambda = \left(K_{1a}\left(a_1/a\right)^2 + K_{1b}\left(a_1/a\right) + K_{1c}\right)\Delta_1^2 + \left(K_{2a}\left(a_1/a\right)^2 + K_{2b}\left(a_1/a\right) + K_{2c}\right)\Delta_1$$
$$+ \left(K_{3a}\left(a_1/a\right)^2 + K_{3b}\left(a_1/a\right) + K_{3c}\right)$$

$$C'_\Lambda = \left(K_{1a}\left(a_1/a\right)^2 + K_{1b}\left(a_1/a\right) + K_{1c}\right)\Delta_1^2 + \left(K_{2a}\left(a_1/a\right)^2 + K_{2b}\left(a_1/a\right) + K_{2c}\right)\Delta_1$$
$$+ \left(K_{3a}\left(a_1/a\right)^2 + K_{3b}\left(a_1/a\right) + K_{3c}\right)$$

[Table 6]

|  | A'$_W$ | A'$_\Lambda$ | B'$_W$,C'$_W$ | B'$_\Lambda$ | C'$_\Lambda$ |
|---|---|---|---|---|---|
| K$_{1a}$ | -34012 | 43309 | 13234 | -30443 | 105834 |
| K$_{1b}$ | 467994 | -338612 | -103738 | 247577 | -496611 |
| K$_{1c}$ | -608285 | 38133 | 180207 | -536187 | 726884 |
| K$_{2a}$ | -194 | -1144 | -371 | 1093 | -1583 |
| K$_{2b}$ | -2478 | 6763 | 2369 | -6337 | 7150 |
| K$_{2c}$ | 4558 | -4778 | -3675 | 12001 | -12010 |
| K$_{3a}$ | 1.5 | 4.4 | 0.9 | -3.3 | 4.2 |
| K$_{3b}$ | 1.7 | -24.4 | -5.4 | 15.8 | -16.8 |
| K$_{3c}$ | 2.1 | 62.9 | 19.9 | 6.7 | 74.8 |

4. The multi-core optical fiber according to claim 1, wherein

the plurality of cores is two cores disposed in a line along the longitudinal direction of the multi-core optical fiber, a diameter of the third cladding region is $125 \pm 1$ $\mu$m, a cutoff wavelength is 1.53 $\mu$m or less, and when an identifier of a mode field diameter at a wavelength of 1.55 $\mu$m is W-2, an identifier of a core interval is A-2, a radius of the core is a, and a radius of an inner diameter of the second cladding region is $a_1$, and when an identifier of a mode field diameter at a wavelength of 1.55 $\mu$m is W, an identifier of a core interval is A, a mode field diameter and a core interval corresponding to an intersection A of the first line and the second line are $A_W$ and $A_\Lambda$, a mode field diameter and a core interval corresponding to an intersection B of the first line and the third line are $B_W$ and $B_\Lambda$, and a mode field diameter and a core interval corresponding to an intersection C of the second line and the third line are $C_W$ and $C_\Lambda$, when the plurality of cores is four cores, a mode field diameter $A_{W-2}$ and a core interval $A_{\Lambda-2}$ corresponding to the intersection A, a mode field diameter $B_{W-2}$ and a core interval $B_{\Lambda-2}$ corresponding to the intersection B, and a mode field diameter $C_{W-2}$ and a core interval $C_{\Lambda-2}$ corresponding to the intersection C are expressed by following formula and table.

[Math. 9]

$$A_{W-2} = A_W + \frac{(\sqrt{2}-1)A_\Lambda}{K_C - \sqrt{2}K_B}$$

$$A_{\Lambda-2} = \frac{\sqrt{2}(K_C - K_B)}{K_C - \sqrt{2}K_B} A_\Lambda$$

$$B_{W-2} = C_{W-2} = B_W = C_W$$

$$B_{\Lambda-2} = \sqrt{2}B_\Lambda$$

$$C_{\Lambda-2} = C_\Lambda$$

where

$$A_W = \left(K_{1a}\left(^{a_1}/_a\right)^2 + K_{1b}\left(^{a_1}/_a\right) + K_{1c}\right)\Delta_1^2 + \left(K_{2a}\left(^{a_1}/_a\right)^2 + K_{2b}\left(^{a_1}/_a\right) + K_{2c}\right)\Delta_1 + \left(K_{3a}\left(^{a_1}/_a\right)^2 + K_{3b}\left(^{a_1}/_a\right) + K_{3c}\right)$$

$$A_\Lambda = \left(K_{1a}\left(^{a_1}/_a\right)^2 + K_{1b}\left(^{a_1}/_a\right) + K_{1c}\right)\Delta_1^2 + \left(K_{2a}\left(^{a_1}/_a\right)^2 + K_{2b}\left(^{a_1}/_a\right) + K_{2c}\right)\Delta_1 + \left(K_{3a}\left(^{a_1}/_a\right)^2 + K_{3b}\left(^{a_1}/_a\right) + K_{3c}\right)$$

$$B_W = C_W = \left(K_{1a}\left(^{a_1}/_a\right)^2 + K_{1b}\left(^{a_1}/_a\right) + K_{1c}\right)\Delta_1^2 + \left(K_{2a}\left(^{a_1}/_a\right)^2 + K_{2b}\left(^{a_1}/_a\right) + K_{2c}\right)\Delta_1 + \left(K_{3a}\left(^{a_1}/_a\right)^2 + K_{3b}\left(^{a_1}/_a\right) + K_{3c}\right)$$

$$B_\Lambda = \left(K_{1a}\left(^{a_1}/_a\right)^2 + K_{1b}\left(^{a_1}/_a\right) + K_{1c}\right)\Delta_1^2 + \left(K_{2a}\left(^{a_1}/_a\right)^2 + K_{2b}\left(^{a_1}/_a\right) + K_{2c}\right)\Delta_1 + \left(K_{3a}\left(^{a_1}/_a\right)^2 + K_{3b}\left(^{a_1}/_a\right) + K_{3c}\right)$$

$$C_\Lambda = \left(K_{1a}\left(^{a_1}/_a\right)^2 + K_{1b}\left(^{a_1}/_a\right) + K_{1c}\right)\Delta_1^2 + \left(K_{2a}\left(^{a_1}/_a\right)^2 + K_{2b}\left(^{a_1}/_a\right) + K_{2c}\right)\Delta_1 + \left(K_{3a}\left(^{a_1}/_a\right)^2 + K_{3b}\left(^{a_1}/_a\right) + K_{3c}\right)$$

$$K_B = \frac{B_\Lambda - A_\Lambda}{B_W - A_W}$$

$$K_C = \frac{C_\Lambda - A_\Lambda}{C_W - A_W}$$

[Table 7]

|  | $A_W$ | $A_\Lambda$ | $B_W, C_W$ | $B_\Lambda$ | $C_\Lambda$ |
|---|---|---|---|---|---|
| $K_{1a}$ | -267786 | 699182 | 20715 | -89461 | 93858 |
| $K_{1b}$ | 1424041 | -3124798 | -131365 | 518887 | -473595 |
| $K_{1c}$ | -1554861 | 2937634 | 211061 | -855785 | 730568 |
| $K_{2a}$ | 2440 | -7950 | -480 | 1856 | -1499 |
| $K_{2b}$ | -13009 | 35480 | 2775 | -9953 | 7296 |
| $K_{2c}$ | 14698 | -34816 | -4115 | 16287 | -12524 |
| $K_{3a}$ | -6.0 | 21.3 | 1.4 | -5.8 | 4.4 |
| $K_{3b}$ | 31.2 | -94.7 | -7.5 | 28.8 | -19.7 |
| $K_{3c}$ | -25.2 | 136.6 | 22.1 | -7.0 | 77.8 |

5. The multi-core optical fiber according to claim 1, wherein

the plurality of cores is two cores disposed in a line along the longitudinal direction of the multi-core optical fiber,
a diameter of the third cladding region is $125 \pm 1$ $\mu$m,
a cutoff wavelength is 1.46 $\mu$m or less, and
when an identifier of a mode field diameter at a wavelength of 1.55 $\mu$m is W-2, an identifier of a core interval is A-2, a radius of the core is a, and a radius of an inner diameter of the second cladding region is $a_1$, and
when an identifier of a mode field diameter at a wavelength of 1.55 $\mu$m is W, an identifier of a core interval is A, a mode field diameter and a core interval corresponding to an intersection A' between the first line and the second line are $A'_W$ and $A'_\Lambda$, a mode field diameter and a core interval corresponding to an intersection B' between the first line and the third line are $B'_W$ and $B'_\Lambda$, and a mode field diameter and a core interval corresponding to an intersection C' between the second line and the third line are $C'_W$ and $C'_\Lambda$ when the plurality of cores is four cores, a mode field diameter $A'_{W-2}$ and a core interval $A'_{\Lambda-2}$ corresponding to the intersection A', a mode field diameter $B'_{W-2}$ and a core interval $B'_{\Lambda-2}$ corresponding to the intersection B', and a mode field diameter $C'_{W-2}$ and a core interval $C'_{\Lambda-2}$ corresponding to the intersection C' are expressed by following formula and table.

[Math. 10]

$$A'_{W-2} = A'_W + \frac{(\sqrt{2} - 1)A'_\Lambda}{K_C - \sqrt{2}K_B}$$

$$A'_{\Lambda-2} = \frac{\sqrt{2}(K_C - K_B)}{K_C - \sqrt{2}K_B}A'_\Lambda$$

$$B'_{W-2} = C'_{W-2} = B'_W = C'_W$$

$$B'_{\Lambda-2} = \sqrt{2}B'_\Lambda$$

$$C'_{\Lambda-2} = C'_\Lambda$$

where

$$A'_W = \left(K_{1a}\left(a_1/a\right)^2 + K_{1b}\left(a_1/a\right) + K_{1c}\right)\Delta_1^2 + \left(K_{2a}\left(a_1/a\right)^2 + K_{2b}\left(a_1/a\right) + K_{2c}\right)\Delta_1$$
$$+ \left(K_{3a}\left(a_1/a\right)^2 + K_{3b}\left(a_1/a\right) + K_{3c}\right)$$

$$A'_\Lambda = \left(K_{1a}\left(a_1/a\right)^2 + K_{1b}\left(a_1/a\right) + K_{1c}\right)\Delta_1^2 + \left(K_{2a}\left(a_1/a\right)^2 + K_{2b}\left(a_1/a\right) + K_{2c}\right)\Delta_1$$
$$+ \left(K_{3a}\left(a_1/a\right)^2 + K_{3b}\left(a_1/a\right) + K_{3c}\right)$$

$$B'_W = C'_W = \left(K_{1a}\left(a_1/a\right)^2 + K_{1b}\left(a_1/a\right) + K_{1c}\right)\Delta_1^2 + \left(K_{2a}\left(a_1/a\right)^2 + K_{2b}\left(a_1/a\right) + K_{2c}\right)\Delta_1$$
$$+ \left(K_{3a}\left(a_1/a\right)^2 + K_{3b}\left(a_1/a\right) + K_{3c}\right)$$

$$B'_\Lambda = \left(K_{1a}\left(a_1/a\right)^2 + K_{1b}\left(a_1/a\right) + K_{1c}\right)\Delta_1^2 + \left(K_{2a}\left(a_1/a\right)^2 + K_{2b}\left(a_1/a\right) + K_{2c}\right)\Delta_1$$
$$+ \left(K_{3a}\left(a_1/a\right)^2 + K_{3b}\left(a_1/a\right) + K_{3c}\right)$$

$$C'_\Lambda = \left(K_{1a}\left(a_1/a\right)^2 + K_{1b}\left(a_1/a\right) + K_{1c}\right)\Delta_1^2 + \left(K_{2a}\left(a_1/a\right)^2 + K_{2b}\left(a_1/a\right) + K_{2c}\right)\Delta_1$$
$$+ \left(K_{3a}\left(a_1/a\right)^2 + K_{3b}\left(a_1/a\right) + K_{3c}\right)$$

$$K_B = \frac{B'_\Lambda - A'_\Lambda}{B'_W - A'_W}$$

$$K_C = \frac{C'_\Lambda - A'_\Lambda}{C'_W - A'_W}$$

[Table 8]

|  | $A'_W$ | $A'_\Lambda$ | $B'_W, C'_W$ | $B'_\Lambda$ | $C'_\Lambda$ |
|---|---|---|---|---|---|
| $K_{1a}$ | -34012 | 43309 | 13234 | -30443 | 105834 |
| $K_{1b}$ | 467994 | -338612 | -103738 | 247577 | -496611 |
| $K_{1c}$ | -608285 | 38133 | 180207 | -536187 | 726884 |
| $K_{2a}$ | -194 | -1144 | -371 | 1093 | -1583 |
| $K_{2b}$ | -2478 | 6763 | 2369 | -6337 | 7150 |
| $K_{2c}$ | 4558 | -4778 | -3675 | 12001 | -12010 |
| $K_{3a}$ | 1.5 | 4.4 | 0.9 | -3.3 | 4.2 |
| $K_{3b}$ | 1.7 | -24.4 | -5.4 | 15.8 | -16.8 |
| $K_{3c}$ | 2.1 | 62.9 | 19.9 | 6.7 | 74.8 |

6. The multi-core optical fiber according to claim 1, wherein

a diameter of the third cladding region is 125±1 μm, and
a diameter of the multi-core optical fiber surrounded by a cover layer is 200±20 μm.

7. A multi-core optical fiber comprising:

a plurality of cores that is disposed in a square lattice shape or in a line along a longitudinal direction of the multi-core optical fiber;

a plurality of first cladding regions that surrounds the plurality of cores, respectively, and has a refractive index lower than a refractive index of the surrounded cores;

a plurality of second cladding regions that surrounds the plurality of first cladding regions, respectively, and has a refractive index lower than the refractive index of the surrounded first cladding regions; and

a third cladding region that surrounds the plurality of second cladding regions and has a refractive index lower than the refractive index of the plurality of cores,

wherein

a diameter of the third cladding region is 125±1 μm,

a cutoff wavelength is 1.53 μm or less,

a mode field diameter of the plurality of cores at a wavelength of 1.55 μm is 9.5 μm to 15.0 μm, and

a core interval of the plurality of cores is 33 μm to 50 μm.

8. A method for designing a multi-core optical fiber, the multi-core optical fiber including:

a plurality of cores that is disposed in a square lattice shape or in a line along a longitudinal direction of the multi-core optical fiber;

a plurality of first cladding regions that surrounds the plurality of cores, respectively, and has a refractive index lower than a refractive index of the surrounded cores;

a plurality of second cladding regions that surrounds the plurality of first cladding regions, respectively, and has a refractive index lower than the refractive index of the surrounded first cladding regions; and

a third cladding region that surrounds the plurality of second cladding regions and has a refractive index lower than the refractive index of the plurality of cores,

the method comprising:

calculating, by a computer, a mode field diameter and a core interval corresponding to a region surrounded by intersections of a first line indicating an upper limit of a core interval in which an excessive loss of a core is equal to or less than a predetermined value, a second line indicating a lower limit of a core interval in which crosstalk between cores is equal to or less than a predetermined value, and a third line indicating a lower limit of a mode field diameter in which an increase amount of Rayleigh scattering loss of a core is equal to or less than a predetermined value in a graph representing a relationship between a mode field diameter and a core interval as a mode field diameter and a core interval of the plurality of cores.

# Fig. 1

$125\pm1\,\mu\text{m}$

# Fig. 2

# Fig. 3

# Fig. 4

# Fig. 5

# Fig. 6

# Fig. 7A

Graph legend:
$a_1/a=1.5$
$a_2/a=2.5$
$\lambda =1.625\,\mu m$
$\alpha c=0.01 dB/km(\lambda =1.625\,\mu m)$
$XT =-35 dB/1km(\lambda =1.625\,\mu m)$

Y-axis left: MFD/1.55 $\mu$m($\mu$m)
Y-axis right: CORE INTERVAL ($\mu$m)
X-axis: $\Delta_1$

Curve labels:
CORE INTERVAL OF A' ($\lambda_c=1.46\,\mu m$)
MFD OF A($\lambda_c=1.53\,\mu m$)
CORE INTERVAL OF A($\lambda_c=1.53\,\mu m$)
MFD OF A' ($\lambda_c=1.46\,\mu m$)

# Fig. 7B

# Fig. 8A

# Fig. 8B

# Fig. 9A

# Fig. 9B

# Fig. 10

```
                                              2
   ┌─────────────────────────────────────┐
   │          MCF DESIGN DEVICE          │
   │                              21     │
   │    ┌───────────────────────┐        │
   │    │   CALCULATION UNIT     │        │
   │    └───────────────────────┘        │
   │                              22     │
   │    ┌───────────────────────┐        │
   │    │      OUTPUT UNIT       │        │
   │    └───────────────────────┘        │
   │                              23     │
   │    ┌───────────────────────┐        │
   │    │     STORAGE UNIT       │        │
   │    └───────────────────────┘        │
   └─────────────────────────────────────┘
```

# Fig. 11

```
                    ┌─────────────────┐
                    │      START      │
                    └─────────────────┘
                             │
                             ▼                          S1
      ┌──────────────────────────────────────────────┐
      │        CALCULATE LOWER LIMIT OF MFD,          │
      │         LOWER LIMIT OF CORE INTERVAL,         │
      │      AND UPPER LIMIT OF CORE INTERVAL         │
      └──────────────────────────────────────────────┘
                             │
                             ▼                          S2
      ┌──────────────────────────────────────────────┐
      │      INPUT LOWER LIMIT OF MFD, LOWER LIMIT    │
      │       OF CORE INTERVAL, AND UPPER LIMIT       │
      │          OF CORE INTERVAL TO GRAPH            │
      └──────────────────────────────────────────────┘
                             │
                             ▼                          S3
      ┌──────────────────────────────────────────────┐
      │  CALCULATE INTERSECTIONS OF LOWER LIMIT LINE  │
      │   OF MFD, LOWER LIMIT LINE OF CORE INTERVAL,  │
      │     AND UPPER LIMIT LINE OF CORE INTERVAL     │
      └──────────────────────────────────────────────┘
                             │
                             ▼                          S4
      ┌──────────────────────────────────────────────┐
      │        CALCULATE MFD AND CORE INTERVAL        │
      └──────────────────────────────────────────────┘
                             │
                             ▼                          S5
      ┌──────────────────────────────────────────────┐
      │         OUTPUT MFD AND CORE INTERVAL          │
      └──────────────────────────────────────────────┘
                             │
                             ▼
                    ┌─────────────────┐
                    │       END       │
                    └─────────────────┘
```

# Fig. 12

# Fig. 13

## INTERNATIONAL SEARCH REPORT

| International application No. |
| --- |
| **PCT/JP2023/010317** |

| | |
| --- | --- |
| **A. CLASSIFICATION OF SUBJECT MATTER** | |
| *G02B 6/02*(2006.01)i | |
| FI: G02B6/02 461 | |
| According to International Patent Classification (IPC) or to both national classification and IPC | |

| **B. FIELDS SEARCHED** |
| --- |
| Minimum documentation searched (classification system followed by classification symbols) |
| G02B6/02-6/10; G02B6/44 |
| Documentation searched other than minimum documentation to the extent that such documents are included in the fields searched |
| Published examined utility model applications of Japan 1922-1996<br>Published unexamined utility model applications of Japan 1971-2023<br>Registered utility model specifications of Japan 1996-2023<br>Published registered utility model applications of Japan 1994-2023 |
| Electronic data base consulted during the international search (name of data base and, where practicable, search terms used) |

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022/034662 A1 (NIPPON TELEGRAPH AND TELEPHONE CORPORATION) 17 February 2022 (2022-02-17) | 1-3, 6-7 |
| | paragraphs [0020]-[0054], fig. 2-3, 5-14 | |
| Y | | 4-5 |
| A | | 8 |
| Y | JP 2013-088458 A (NIPPON TELEGRAPH AND TELEPHONE CORPORATION) 13 May 2013 (2013-05-13) | 4-5 |
| | paragraphs [0014]-[0030], fig. 1-6 | |
| A | | 8 |
| A | JP 2021-012226 A (SUMITOMO ELECTRIC INDUSTRIES, LTD.) 04 February 2021 (2021-02-04) | 1-8 |
| | entire text, all drawings | |
| A | JP 2022-015746 A (THE FURUKAWA ELECTRIC CO., LTD.) 21 January 2022 (2022-01-21) | 1-8 |
| | entire text, all drawings | |

| ✓ Further documents are listed in the continuation of Box C. | ✓ See patent family annex. |
| --- | --- |

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 May 2023** | **06 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/010317**

### C. DOCUMENTS CONSIDERED TO BE RELEVANT

| Category* | Citation of document, with indication, where appropriate, of the relevant passages | Relevant to claim No. |
|---|---|---|
| A | US 2021/0294024 A1 (CORNING INC.) 23 September 2021 (2021-09-23)<br>entire text, all drawings | 1-8 |
| A | JP 2023-036400 A (NIPPON TELEGRAPH AND TELEPHONE CORPORATION) 14 March 2023 (2023-03-14)<br>entire text, all drawings | 1-8 |

Form PCT/ISA/210 (second sheet) (January 2015)

## INTERNATIONAL SEARCH REPORT
### Information on patent family members

International application No.

**PCT/JP2023/010317**

| Patent document cited in search report | | | Publication date (day/month/year) | Patent family member(s) | | | Publication date (day/month/year) |
|---|---|---|---|---|---|---|---|
| WO | 2022/034662 | A1 | 17 February 2022 | (Family: none) | | | |
| JP | 2013-088458 | A | 13 May 2013 | (Family: none) | | | |
| JP | 2021-012226 | A | 04 February 2021 | US | 2021/0003773 | A1 | |
| | | | | entire text, all drawings | | | |
| | | | | EP | 3761088 | A1 | |
| | | | | CN | 112180498 | A | |
| JP | 2022-015746 | A | 21 January 2022 | (Family: none) | | | |
| US | 2021/0294024 | A1 | 23 September 2021 | WO | 2021/188290 | A1 | |
| | | | | JP | 2023-518466 | A | |
| JP | 2023-036400 | A | 14 March 2023 | (Family: none) | | | |

Form PCT/ISA/210 (patent family annex) (January 2015)

**EP 4 682 597 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022034662 A
- JP 7172634 B
- JP 6560806 B